# EUROPÄISCHE PATENTSCHRIFT

(11) **EP 2 734 383 B1**
(45) Veröffentlichungstag und Bekanntmachung des Hinweises auf die Patenterteilung: **17.06.2015**
(21) Anmeldenummer: 12773215.4
(22) Anmeldetag: 25.09.2012
(51) Int. Cl.: B42D 15/00, G02F 1/17, G02F 1/09, B42D 25/41, B42D 25/415, B42D 25/29

(54) **MIKROKAPSEL UND VERWENDUNG DERSELBEN, MIKROKAPSELN AUFWEISENDES SICHERHEITSELEMENT UND MIT DEMSELBEN AUSGESTATTETER DATENTRÄGER**
MICROCAPSULE AND USE THEREOF, SECURITY ELEMENT HAVING MICROCAPSULES AND DATA CARRIER EQUIPPED THEREWITH
MICROCAPSULE ET UTILISATION, ÉLÉMENT DE SÉCURITÉ PRÉSENTANT DES MICROCAPSULES ET SUPPORT DE DONNÉES ÉQUIPÉ D'UN TEL ÉLÉMENT DE SÉCURITÉ

(30) Priorität: 20.10.2011 DE 102011116491
(43) Veröffentlichungstag der Anmeldung: 28.05.2014
(73) Patentinhaber: Giesecke & Devrient GmbH, 81677 München (DE)
(72) Erfinder: MENGEL, Christoph, 83607 Holzkirchen (DE); SCHIFFMANN, Peter, 81673 München (DE); BORNSCHLEGL, Alexander, 81735 München (DE); OTTO, Daniela, 81669 München (DE)
(86) Internationale Anmeldenummer: PCT/EP2012/004012
(87) Internationale Veröffentlichungsnummer: WO 2013/056782

(56) Entgegenhaltungen:
- EP-A1- 1 267 200
- WO-A1-2009/014675
- WO-A2-2009/074284
- JP-A- 6 313 880
- US-A- 4 919 521

## Beschreibung

Die Erfindung betrifft eine Mikrokapsel, deren Lichtdurchlässigkeit durch Anlegen eines Magnetfelds intensivierbar ist, und die Verwendung derselben. Die Erfindung betrifft ferner ein die erfindungsgemäßen Mikrokapseln aufweisendes Sicherheitselement zur Absicherung von Wertgegenständen und einen mit dem Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Für diesen Zweck werden seit einiger Zeit auch magnetisch ausrichtbare Effektpigmente eingesetzt, die magnetisch in Form eines darzustellenden Motivs ausgerichtet werden können.

Aus der Druckschrift WO 2009/074284 A2 ist eine Kombination von ersten optisch variablen Effektpigmenten und zweiten, durch ein äußeres Magnetfeld reversibel ausrichtbaren Effektpigmenten bekannt. Der optisch variable Effekt der ersten Effektpigmente tritt dabei mit den interaktiv auslösbaren, dreidimensional anmutenden Erscheinungsbildern in Wechselwirkung, die durch die magnetisch ausrichtbaren zweiten Effektpigmente erzeugt werden.

US 4,919,521 A offenbart ein Elektromagnetischesgerät wobei ein elektrisches oder magnetisches Feld Mikrokapseln ausrichten kann.

Ausgehend davon liegt der Erfindung die Aufgabe zugrunde, Sicherheitselemente mit magnetisch ausrichtbaren Magnetpigmenten weiter zu verbessern und insbesondere ein Sicherheitselement mit attraktivem visuellem Erscheinungsbild anzugeben.

Diese Aufgabe wird durch die erfindungsgemäße Mikrokapsel, deren Lichtdurchlässigkeit durch Anlegen eines Magnetfelds intensivierbar ist, das die erfindungsgemäßen Mikrokapseln aufweisende Sicherheitselement zur Absicherung von Wertgegenständen und den mit dem Sicherheitselement ausgestatteten Datenträger gemäß den unabhängigen Ansprüchen gelöst. Weiterbildungen der Erfindung sind Gegenstand der abhängigen Ansprüche.

Ein erster Aspekt der Erfindung betrifft eine Mikrokapsel, deren Lichtdurchlässigkeit durch Anlegen eines äußeren Magnetfelds reversibel intensivierbar ist, umfassend eine Kapselhülle, in die ein lichtdurchlässiges Trägermedium, insbesondere eine lichtdurchlässige Trägerflüssigkeit, und eine Vielzahl von magnetischen, lichtundurchlässigen Pigmenten mit einem mittleren Teilchendurchmesser in einem Bereich von 0,1 µm bis 10 µm eingeschlossen sind. Dabei können die Pigmente insbesondere so angepasst sein, dass sie ohne äußeres Magnetfelds ungeordnet vorliegen und beim Anlegen eines Magnetfelds in eindimensional geordneter Form, insbesondere in Form von Ketten aus Pigmenten, vorliegen.

Ein dritter Aspekt der Erfindung betrifft ein Sicherheitselement, das zur Absicherung von Wertgegenständen geeignet ist und dessen Lichtdurchlässigkeit durch Anlegen eines äußeren Magnetfelds reversibel intensivierbar ist, mit einer Schicht, die eine Vielzahl von Mikrokapseln gemäß dem ersten Aspekt aufweist.

Ein vierter Aspekt der Erfindung betrifft ein Verfahren zum Herstellen eines Sicherheitselements, umfassend das Bereitstellen eines Sicherheitselements gemäß dem dritten Aspekt der Erfindung und das Behandeln der Mikrokapseln in zumindest einem Teilbereich des Sicherheitselements mittels Laserstrahlung, insbesondere mittels gepulster Laserstrahlung im nahen Infrarot, wodurch die Kapselhüllen der Mikrokapseln beschädigt werden, so dass die Trägerflüssigkeit aus den Mikrokapseln austritt und die Pigmente unbeweglich in den beschädigten Kapselhüllen zurückbleiben.

Ein fünfter Aspekt der Erfindung betrifft ein Verfahren zum Herstellen eines Sicherheitselements, umfassend das Bereitstellen eines Sicherheitselements gemäß dem dritten Aspekt der Erfindung und das Behandeln der Mikrokapseln in zumindest einem Teilbereich des Sicherheitselements mittels einer vorbestimmten reaktiven Substanz, insbesondere mittels hydrophober Monomere, die durch die Kapselhüllen in die Mikrokapseln eindringt und die in den Mikrokapseln enthaltenen Pigmente durch chemische Reaktion örtlich irreversibel fixiert.

Ein sechster Aspekt der Erfindung betrifft ein Sicherheitselement, das durch das Verfahren gemäß dem vierten oder dem fünften Aspekt der Erfindung erhältlich ist.

Ein siebter Aspekt der Erfindung betrifft einen Datenträger, insbesondere eine Banknote oder ein anderes Wertdokument, einen Pass, eine Urkunde, Bezahlkarte oder eine Ausweiskarte, mit einem Sicherheitselement gemäß dem dritten oder dem sechsten Aspekt der Erfindung.

Im Rahmen der vorliegenden Erfindung beziehen sich die Begriffe "lichtundurchlässig" und "lichtdurchlässig" auf den für den Betrachter wahrnehmbaren sichtbaren Wellenlängenbereich von ca. 380 nm bis ca. 780 nm. Selbstverständlich können die Effekte der Lichtdurchlässigkeit und der Lichtundurchlässigkeit, wie etwa die oben erwähnte Intensivierbarkeit der Lichtdurchlässigkeit, darüber hinaus auch im Wellenlängenbereich von weniger als 380 nm oder mehr als 780 nm auftreten, wodurch eine maschinelle Detektion auch in dem nichtsichtbaren Wellenlängenbereich möglich ist. Im Rahmen der vorliegenden Erfindung wird unter einem "transparenten" Material ein Material verstanden, das einfallende elektromagnetische Strahlung zumindest im sichtbaren Wellenlängenbereich von ca. 380 nm bis ca. 780 nm im Wesentlichen vollständig hindurchlässt. Bei einem "transparenten" Material im Rahmen der vorliegenden Erfindung ist der Transmissionsgrad T insbesonderte ≥ 0,8, wobei T als Quotient der durch das Material hindurch gelassenen Strahlungsleistung L und der auf das Substrat eingestrahlten Strahlungsleistung L₀ definiert ist. Diese exakte Definition des Transmissionsgrades (T = L/L₀) entspricht der im "Lexikon der Optik", Spektrum Akademischer Verlag, Heidelberg 2003, Band 2, Seite 366, Begriff "Transmissionsgrad" gegebenen Definition. Ein "opakes" bzw. "undurchsichtiges" bzw. "lichtundurchlässiges" Material weist im Rahmen der vorliegenden Erfindung insbesondere einen Transmissionsgrad T ≤ 0,1 auf, wobei T als Quotient L/L₀ definiert ist (siehe oben). Im Rahmen der vorliegenden Erfindung lässt ein opakes Material einfallende elektromagnetische Strahlung daher zumindest im sichtbaren Wellenlängenbereich von ca. 380 nm bis ca. 780 nm im Wesentlichen nicht durch. Ein "transluzentes" bzw. "durchscheinendes" bzw. "semitransparentes" Material weist im Rahmen der vorliegenden Erfindung zumindest im sichtbaren Wellenlängenbereich von ca. 380 nm bis ca. 780 nm insbesondere einen Transmissionsgrad T größer 0,1 und kleiner 0,8 auf, d.h. 0,1 < T < 0,8. Weiterhin wird vorliegend unter einer Betrachtung, beispielsweise eines Sicherheitselementes, in Auflicht eine Beleuchtung von einer Seite und eine beispielsweise senkrechte Betrachtung des Sicherheitselementes von derselben Seite verstanden. Eine Betrachtung in Auflicht liegt somit dann vor, wenn die Vorderseite des Sicherheitselementes beleuchtet und auch betrachtet wird. Unter einer Betrachtung im Durchlicht wird vorliegend eine Beleuchtung eines Sicherheitselementes von einer Seite und eine Betrachtung des Sicherheitselementes von einer anderen Seite, insbesondere der gegenüberliegenden Seite, verstanden. Eine Betrachtung im Durchlicht liegt somit beispielsweise dann vor, wenn die Rückseite des Sicherheitselementes beleuchtet und die Vorderseite des Sicherheitselementes betrachtet wird. Das Licht scheint somit durch das Sicherheitselement hindurch und ein Betrachter nimmt das hindurchtretende Licht wahr. Im Durchlicht wird der entstehende visuelle Eindruck des Betrachters durch die Lichtdurchlässigkeit der verschiedenen Bereiche des Sicherheitselementes erzeugt.

Die Mikrokapseln gemäß dem ersten Aspekt der Erfindung sind mit magnetischen, lichtundurchlässigen Pigmenten und einem lichtdurchlässigen Trägermedium, insbesondere einer lichtdurchlässigen Trägerflüssigkeit, gefüllt. Die Pigmente können beispielsweise in Form einer Dispersion aus im Vergleich zur Größe der Mikrokapsel kleinen Pigmenten vorliegen. Werden diese Mikrokapseln in ein geeignetes Bindemittel eingebettet und danach drucktechnisch auf ein Substrat, wie etwa ein Papier- oder Foliensubstrat, aufgebracht, ist der Substratuntergrund an den Stellen, an denen Mikrokapseln vorhanden sind, ohne äußeres Magnetfeld nicht oder kaum sichtbar. Dies ist darauf zurückzuführen, dass die magnetischen, lichtundurchlässigen Pigmente in den Mikrokapseln ohne äußeres Magnetfeld ungeordnet bzw. unregelmäßig verteilt vorliegen, so dass nahezu sämtliches Licht absorbiert bzw. stark gestreut wird. Die Mikrokapseln erscheinen damit für den Betrachter bei der Betrachtung des Substrats im Auflicht in der Eigenfarbe des magnetischen Pigments. Wird von der der Schicht mit den Mikrokapseln gegenüberliegenden Seite des Substrats mittels eines Permanentmagnets ein Magnetfeld angelegt, in dem sich die Magnetfeldlinien im Wesentlichen in Blickrichtung des Betrachters befinden, kommt es bei der Verwendung von geeigneten magnetischen Pigmenten nicht zu einer Migration und einer damit verbundenen Anhäufung der magnetischen Pigmente an einer Seite der Mikrokapsel, sondern die magnetischen Pigmente richten sich regelmäßig entlang der Magnetfeldlinien aus und bilden Ketten aus Pigmenten. Die Ketten sind nicht notwendigerweise unverzweigt, sondern können leicht verzweigt sein. Die kettenartige Anordnung der Pigmente wird hierin als "eindimensional geordnete Form der Anordnung" bezeichnet. Innerhalb einer Mikrokapsel können mehrere dieser Ketten (insbesondere bis zu acht Ketten), die voneinander unterscheidbar ausgebildet werden, entstehen. Die Abstände zwischen den einzelnen Ketten betragen insbesondere ein Vielfaches des Pigmentdurchmessers, so dass Licht in Richtung des Magnetfelds zwischen den Ketten hindurch dringen kann. Auf diese Weise erscheinen die Mikrokapseln bei der Betrachtung im Auflicht in der Farbe des Substratuntergrunds. Wird das Magnetfeld abgeschaltet oder abgeschwächt, verteilen sich die magnetischen Pigmente wieder statistisch innerhalb der Mikrokapsel, so dass der Betrachter die Mikrokapseln in der Eigenfarbe des magnetischen Pigments wahrnimmt.

Die Mikrokapseln gemäß dem ersten Aspekt der Erfindung können zur Absicherung von Wertgegenständen, insbesondere in Form eines Sicherheitselements, genutzt werden. Dabei werden die Mikrokapseln im einfachsten Fall auf das gegen Fälschung zu sichernde (Wertdokument-)Substrat, wie etwa ein Papier- oder Foliensubstrat, aufgepudert. Alternativ können die Mikrokapseln in eine Bindemittelmatrix eingebettet und danach drucktechnisch, z.B. mittels Siebdruck oder Flexodruck, auf das zu sichernde Substrat aufgebracht werden. Gemäß einer weiteren Alternative werden die ggf. in einer Bindemittelmatrix eingebetteten Mikrokapseln zunächst auf einen Träger, beispielsweise eine Trägerfolie, aufgebracht. Der mit den Mikrokapseln versehene Träger wird danach auf das zu sichernde (Wertdokument-)Substrat appliziert. Diese Vorgehensweise eignet sich z.B. für die Bereitstellung eines folienartigen Sicherheitselements oberhalb eines in den Datenträger, z.B. eine Banknote, eingebrachten Durchsichtsfensters. Gemäß einer weiteren Alternative werden die Mikrokapseln während der Herstellung des (Wertdokument-)Substrats in das Substrat selbst eingebracht. Dieses Vorgehen kann z.B. in einfacher Weise bei der Herstellung eines Sicherheitspapiers umgesetzt werden.

Sicherheitselemente gemäß dem dritten Aspekt der Erfindung, die die erfindungsgemäßen Mikrokapseln in zumindest einer Schicht aufweisen, lassen sich dadurch optimieren, dass neben den Mikrokapseln zusätzlich Pigmente, insbesondere Effektpigmente mit betrachtungswinkelabhängigem Farb- oder Helligkeitswechsel, eingebettet werden. Auf diese Weise lassen sich visuell sehr eindrucksvolle Kippeffekte, insbesondere Farbkippeffekte, erzeugen. Die die erfindungsgemäßen Mikrokapseln aufweisende Schicht des Sicherheitselements gemäß dem dritten Aspekt der Erfindung kann in einer Weiterbildung auf einer informationsführenden Untergrundschicht, insbesondere einer Siebdruck-, Flexodruckschicht oder einer Stichtiefdruckschicht aufgebracht sein, wobei die Untergrundschicht vorzugsweise in Form von Mustern, Zeichen oder einer Codierung vorliegt. Darüber hinaus kann die die Mikrokapseln aufweisende Schicht auch mit Vorteil auf einer im Wesentlichen vollflächigen Untergrundschicht, insbesondere einer farbigen Untergrundschicht, angeordnet sein. Beispielsweise kann die Untergrundschicht eine Komplementärfarbe zu der Eigenfarbe der magnetischen Pigmente in den Mikrokapseln aufweisen, so dass der Betrachter bei Beaufschlagung des Sicherheitselements mit einem Magnetfeld und der daraus resultierenden Ausrichtung der Magnetpigmente den Farbton der Komplementärfarbe der Untergrundschicht zumindest teilweise wahrnehmen kann. Es sind auch Ausgestaltungen denkbar, bei denen der Farbton der Untergrundschicht auf den Farbton der magnetischen Pigmente so abgestimmt ist, dass sich der Farbeindruck für den Betrachter bei Beaufschlagung des Sicherheitselements mit einem Magnetfeld verändert.

Die die Mikrokapseln aufweisende Schicht des Sicherheitselements gemäß dem dritten Aspekt der Erfindung kann auch mit einer thermochromen oder magnetischen Untergrundschicht kombiniert sein, wobei die magnetische Untergrundschicht vorzugsweise in Form von Mustern, Zeichen oder einer Codierung vorliegt.

In einer bevorzugten Ausgestaltung sind die in den Mikrokapseln enthaltenen magnetischen, lichtundurchlässigen Pigmente sphärische Pigmente, insbesondere kugelförmige oder kugelähnliche, z.B. ellipsoide, Pigmente. Das Verhältnis des größten zum kleinsten Durchmesser (Durchmesser-zu-Dickenverhältnis) der sphärischen Pigmente beträgt dabei insbesondere nicht mehr als 4:1, bevorzugt nicht mehr als 2:1 und besonders bevorzugt nicht mehr als 3:2. Der mittlere Teilchendurchmesser der Pigmente liegt innerhalb eines Bereichs von 0,1 µm bis 10 µm, vorzugsweise innerhalb eines Bereichs von 0,1 µm bis 1,5µm, weiter bevorzugt innerhalb eines Bereichs von 0,1 bis 1µm.

Für die magnetischen, lichtundurchlässigen Pigmente in den Mikrokapseln eignen sich insbesondere Werkstoffe, die als magnetische Pigmente für Codierzwecke oder für die Magnetbandproduktion herangezogen werden. Beiden Werkstoffen kann es sich z.B. um weichmagnetische Werkstoffe handeln, hartmagnetische Werkstoffe werden aber bevorzugt. Der Begriff "hartmagnetisch" bezeichnet hierin einen Stoff mit einer Koerzitivfeldstärke H_{c} von mehr als 10 kA/m. Als magnetische Werkstoffe können z.B. Metalle wie etwa Eisen, Metalllegierungen oder Metalloxide herangezogen werden. Als besonders gut geeignet haben sich oxidische Pigmente herausgestellt, z.B. Eisenoxid-basierte Pigmente, Mangan-Zink-Ferrite, Barium- oder Strontiumferrite, sowie magnetische Tonerpigmente, die gegebenenfalls farbig beschichtet sein können. Eisenoxid-basierte Pigmente werden besonders bevorzugt, z.B. aus Magnetit bzw. Eisen-II-/Eisen-III-Oxid bestehende Pigmente (z.B. Magnetpigment 340, 345 oder 346 der Firma BASF). Aus Magnetit bestehende Pigmente weisen eine tiefschwarze Eigenfarbe auf.

Um im Hinblick auf die Gestaltungsfreiheit des herzustellenden Sicherheitselements gemäß dem dritten Aspekt der Erfindung flexibel zu sein, ist es möglich, ein ursprünglich schwarzes, graues oder braunes Magnetpigment z.B. mittels eines Sol-Gel-Verfahrens mit Titandioxid zu beschichten. Farbschwache, z.B. graue, Magnetpigmente (z.B. Eisenpigmente wie etwa das Magnetpigment 025 der Firma BASF) sind dazu besonders geeignet, weil in diesen Fällen die Titandioxidbeschichtung für das Erreichen eines nahezu weißen Pigments nicht allzu dick sein muss. Es ist weiterhin möglich, auf der Titandioxidbeschichtung eine visuell erkennbare, insbesondere in einem anderen Farbton als das Magnetpigment vorliegende, Farbstoff- oder Pigmentbeschichtung aufzubringen, um ein buntes Magnetpigment zu erzeugen.

Darüber hinaus können die in den erfindungsgemäßen Mikrokapseln enthaltenen magnetischen Pigmente zusätzliche Schichten aufweisen, wie etwa eine Schutzschicht oder eine Funktionsschicht, die dem Pigment Lumineszenz, wie etwa Fluoreszenz oder Phosphoreszenz, IR-Absorption in einem speziellen Spektrum wie etwa im Bereich von 800 nm bis 1500 nm, oder Farbigkeit verleiht.

Die Trägerflüssigkeit in den Mikrokapseln ist vorzugsweise eine hydrophobe Trägerflüssigkeit, die 0 bis 50 Gew.-% eines amphiphilen Additivs und 0 bis 20 Gew.-% generelle Additive, die insbesondere von Verdickern, Farbstoffen, Konservierungsstoffen, Oxidationsschutzstoffen oder Dispergierhilfsmitteln gewählt sind, aufweist. Die hydrophobe Trägerflüssigkeit kann z.B. von der Gruppe bestehend aus einem Mineralöl, einem Isoparaffin, einem Pflanzenöl und einem Fettsäureester gewählt sein oder eine Mischung zweier oder mehrerer dieser Stoffe sein. Als amphiphiles Additiv eignen sich Fettsäurederivate, wobei Stoffe mit einem HLB-Wert von weniger als 3% bevorzugt werden. Die Trägerflüssigkeit weist zweckmäßigerweise eine Viskosität in einem Bereich von 1 mPa*s bis 4000 mPa*s, insbesondere von 5 mPa*s bis 120 mPa*s, jeweils gemessen bei 20 °C, auf. Durch die Viskosität der Trägerflüssigkeit kann die Geschwindigkeit der Ausrichtung und der Rückkehr der Pigmente zum Ausgangszustand gezielt beeinflusst werden. Weiterhin ist es denkbar, Trägerflüssigkeiten mit niedrigem Siedepunkt zu verwenden, die bei Trocknung der Kapseln verdunsten. Es entstehen dann gewissermaßen Hohlkammerkapseln, die pulvrige Magnetmaterialien enthalten.

Die Mikrokapseln selbst haben vorzugsweise einen mittleren Teilchendurchmesser in einem Bereich von 2 µm bis 150 µm, vorzugsweise in einem Bereich von 5 µm bis 80 µm. Es versteht sich, dass der Durchmesser der Mikrokapseln mit Vorteil auf die Größe der verkapselten Magnetpigmente abgestimmt ist. Die Mikrokapsel-Wand hat eine Dicke, die typischerweise einen Wert in einem Bereich von 0,2 % bis 30 %, vorzugsweise in einem Bereich von 3 % bis 15 %, bezogen auf den mittleren Teilchendurchmesser der Mikrokapseln aufweist. Die Mikrokapsel-Wand besteht mit Vorteil aus einem festen, lichtdurchlässigen Material.

Als geeignete Methoden zur Mikroverkapselung können im Allgemeinen alle Verkapselungsmethoden herangezogen werden, die eine stabile Verkapselung von wasserunlöslichen Substanzen ermöglichen und deren Reaktionsverlauf zur Ausbildung einer stabilen Mikrokapselwand entlang einer Grenzfläche führt. Die Mikroverkapselungsmethode kann z.B. auf einer komplexen Koazervation, einer Polykondensationsreaktion, einer Polyadditionsverkapselung, einer radikalischen Polymerisation als Wandbildungsreaktion, oder auf einem physikalischen Verfahren, wie etwa einem Einschluss in Wachs, beruhen. Die komplexe Koazervation ist z.B. in der US 2,800,457 beschrieben und kann insbesondere mit Gelatine, einem Gemisch aus Gelatine und Gummi Arabicum, oder mit modifizierter Gelatine durchgeführt werden. Zur Durchführung einer Polykondensationsreaktion eignen sich insbesondere Aminoplastharze, Melaminharze sowie Phenolharze.

Die Mikroverkapselung kann z.B. in einem flüssigen Medium, insbesondere nach Emulgierung mittels eines Rührwerks, oder in einem gasförmigen Medium (sogenannte Sprühtrocknungsverkapselung) durchgeführt werden.

Die Mikrokapseln können neben der lichtdurchlässigen Trägerflüssigkeit und den lichtundurchlässigen, magnetischen Pigmenten zusätzliche Farbmittel enthalten.

Als besonders geeignet haben sich Mikrokapseln mit einem mittleren Teilchendurchmesser in einem Bereich von 5 µm bis 80 µm herausgestellt, die als magnetische, lichtundurchlässige Pigmente Magnetit-Pigmente mit einem mittleren Teilchendurchmesser in einem Bereich von 0,1 µm bis 1,5 µm aufweisen. Die Herstellung wird zweckmäßigerweise durchgeführt, indem die Pigmente in einem Anteil von 5 Gew.-% bis 25 Gew.-% in einem Neutralöl unter Zusatz eines amphiphilen Dispergiermittels dispergiert und verkapselt werden.

Nachfolgend wird eine Variante des Sicherheitselements gemäß dem dritten Aspekt der Erfindung beschrieben, bei der die die Mikrokapseln aufweisende Schicht neben den Mikrokapseln gemäß dem ersten Aspekt der Erfindung (nachstehend als "erste Mikrokapseln" bezeichnet) zusätzlich eine Vielzahl von zweiten Mikrokapseln aufweist, wobei die zweiten Mikrokapseln jeweils eine Kapselhülle, eine in der Kapselhülle eingeschlossene Trägerflüssigkeit und zumindest ein magnetisch ausrichtbares plättchenförmiges Pigment aufweisen und das magnetisch ausrichtbare plättchenförmige Pigment in der Mikrokapsel im Wesentlichen frei drehbar und durch ein äußeres Magnetfeld reversibel ausrichtbar ist und bevorzugt mehrschichtig mit zumindest einer magnetischen Schicht und mit zumindest einer nichtmagnetischen Schicht ausgebildet ist. Das Sicherheitselement enthält sozusagen eine binäre Mischung verschiedener Magnetkapseln. Zur Herstellung werden die ersten Mikrokapseln zusammen mit den zweiten Mikrokapseln in ein Bindemittel eingebracht und beispielsweise im Sieb-, Flexo- oder Tiefdruck verdruckt.

Während die Mikrokapseln gemäß dem ersten Aspekt der Erfindung durch das angelegte Magnetfeld nur den Grad der Lichtdurchlässigkeit ändern, ermöglichen die plättchenförmige Pigmente enthaltenden zweiten Mikrokapseln zusätzliche Effekte, wie etwa einen Goldglanz oder eine dreidimensionale Tiefe, die durch die Ausrichtung der Pigmente im Magnetfeld bedingt werden.

Die zweiten Mikrokapseln, die die plättchenförmigen Magnetpigmente aufweisen, haben ohne Einwirkung eines äußeren Magnetfelds eine verhältnismäßig schlechte Abdeckung des Untergrunds zur Folge, insbesondere bei größeren Plättchen, die nicht den gesamten Kapselquerschnitt ausfüllen. Die Kombination der zweiten Mikrokapseln, die plättchenförmige Magnetpigmente enthalten, mit den Mikrokapseln gemäß dem ersten Aspekt der Erfindung ist vorteilhaft, was die perfekte Abdeckung des Untergrunds angeht. Dies ist darauf zurückzuführen, dass die plättchenförmigen Magnetpigmente ohne Einwirkung eines äußeren Magnetfelds im Hinblick auf die Verdunklung verhältnismäßig unhomogen in den zweiten Mikrokapseln verteilt sind, während sich die Mikrokapseln gemäß dem ersten Aspekt der Erfindung beim Wegfall eines äußeren Magnetfelds homogen verdunkeln.

Werden die ersten Mikrokapseln und die zweiten Mikrokapseln darüber hinaus in unterschiedlichen Größen eingesetzt, kann die Abdeckung des Untergrundes beim Fehlen eines äußeren Magnetfelds noch weiter erhöht werden, weil die kleineren Kapseln die zwischen den großen Kapseln bestehenden Leerstellen ausfüllen können. Das Verhältnis des mittleren Teilchendurchmessers der großen Kapseln zu dem mittleren Teilchendurchmessers der kleinen Kapseln ist vorzugsweise in einem Bereich von 1,5 bis 10, besonders bevorzugt in einem Bereich von 1,7 bis 10. Bei den großen Mikrokapseln handelt es sich bevorzugt um die oben beschriebenen zweiten Mikrokapseln, d.h. die Mikrokapseln mit den plättchenförmigen Magnetpigmenten. Die großen Mikrokapseln und die kleinen Mikrokapseln werden bevorzugt in einem Volumenverhältnis V_{groß}/Vₖₗₑᵢₙ in einem Bereich von 1:2 bis 10:1, weiter bevorzugt in einem Bereich von 2:1 bis 6:1 eingesetzt. Mit dem Begriff "Volumen" ist hierbei das Volumen der Kapseln allein, ohne Berücksichtigung des Bindemittels, gemeint.

Mikrokapseln mit plättchenförmigen Magnetpigmenten sind im Stand der Technik bekannt (siehe zum Beispiel die WO 2009/074284 A2). Es wird bevorzugt, dass die plättchenförmigen Pigmente in den zweiten Mikrokapseln magnetische Interferenzpigmente mit einer Fabry-Perot-Struktur, magnetische oxidische Mehrschichtpigmente und/oder beschichtete magnetische Reineisenpigmente sind. Der Gewichtsanteil der magnetischen Substanzen in den Pigmenten, die innerhalb der zweiten Mikrokapseln verkapselt sind, liegt mit Vorteil zwischen 10 % und 90 %, vorzugsweise zwischen 35 % und 75 %. Ohne äußeres Magnetfeld sind die Pigmente innerhalb der zweiten Mikrokapseln vorzugsweise isotrop ausgerichtet, weisen also als Gesamtheit keine Vorzugsrichtung auf. Dabei können in der Praxis natürlich gewisse Abweichungen von der idealen isotropen Ausrichtung auftreten, abhängig beispielsweise von der geometrischen Form, der Magnetisierbarkeit, der Viskosität der Trägerflüssigkeit oder der Struktur der Verkapselung. Das Verhältnis des größten zum kleinsten Durchmesser (Durchmesser-zu-Dickenverhältnis) der plättchenförmigen Pigmente beträgt mehr als 4:1, bevorzugt mehr als 10:1 und liegt besonders bevorzugt zwischen 20:1 und 200:1. Der größte Durchmesser der plättchenförmigen Pigmente liegt bevorzugt zwischen 2 µm und 150 µm, insbesondere zwischen 5 µm und 50 µm. Plättchenförmige Magnetpigmente, insbesondere im bevorzugten Größenbereich und im bevorzugten Durchmesser-zu-Dicken-Bereich, können durch ein äußeres Magnetfeld relativ zur Schichtebene nach Wunsch orientiert werden. Sie geben dann, wie die Lamellen einer Jalousie, je nach Orientierung den Blick auf darunterliegende Schichten entweder weitgehend frei (annähernd senkrechte Orientierung relativ zur Schichtebene) oder blockieren ihn teilweise (schräge Orientierung relativ zur Schichtebene) oder vollständig (im Wesentlichen waagrechte Orientierung relativ zur Schichtebene). Bei hohen Durchmesser-zu-Dicken-Verhältnissen lassen sich so hohe Kontraste zwischen transluzenten und deckenden Schichtbereichen einstellen. Die in den zweiten Mikrokapseln enthaltene Trägerflüssigkeit kann ähnlich wie die Trägerflüssigkeit der erfindungsgemäßen ersten Mikrokapseln gewählt werden. Die zweiten Mikrokapseln weisen insbesondere einen Durchmesser zwischen 1 µm und 200 µm, vorzugsweise zwischen 2 µm und 80 µm auf. Es versteht sich, dass der Durchmesser der zweiten Mikrokapseln mit Vorteil auf die Größe der verkapselten plättchenförmigen Magnetpigmente abgestimmt ist. Die Wandstärke der zweiten Mikrokapseln liegt typischerweise zwischen 2 % und 30 %, vorzugsweise zwischen 5 % und 15 % des Durchmessers der zweiten Mikrokapseln.

Im Hinblick auf die plättchenförmigen Magnetpigmente der zweiten Mikrokapseln kommen für die magnetischen Schichten magnetische Metalloxide, insbesondere Eisenoxide, und dabei besonders bevorzugt Fe₃O₄, oder auch Chromoxid in Betracht. Auch magnetische Mischmetalloxide, wie etwa Chromeisenoxid, oder magnetische Metalle, wie Eisen, Kobalt, Nickel oder Gadolinium, können als magnetische Schichten eingesetzt werden. Für die unmagnetischen Schichten kommen insbesondere Oxide, wie Siliziumdioxid, Titandioxid oder Zinnoxid, oder unmagnetische Metalle, wie etwa Aluminium, Chrom, Kupfer oder Gold, in Betracht. Eine der magnetischen oder unmagnetischen Schichten kann auch durch das Trägermaterial des Pigments gebildet sein, beispielsweise bei Pigmenten, die auf Glimmer-, Al₂O₃-, SiO₂-, Reineisen- oder Eisenoxid-Flocken basieren. Ein Beispiel eines für die zweiten Mikrokapseln geeigneten magnetischen Mehrschichtpigments enthält Korund (α-Al₂O₃) als Trägermaterial und eine Interferenzbeschichtung aus Eisenoxid (insbesondere Fe₃O₄) und gegebenenfalls zusätzlich Titandioxid (TiO₂). Ein weiteres Beispiel eines für die zweiten Mikrokapseln geeigneten magnetischen Mehrschichtpigments enthält Al₂O₃, insbesondere Korund, als Trägermaterial und eine Interferenzbeschichtung aus Eisenoxid (insbesondere Fe₃O₄) und einem geringen Anteil Magnesiumoxid. Ein solches Mehrschichtpigment weist einen goldenen Farbton auf. Um ein silberfarbiges magnetisches Pigment zu erhalten, kann ein Al₂O₃-, insbesondere Korund-Trägermaterial mit einer Interferenzbeschichtung aus Eisenoxid (insbesondere Fe₃O₄) sowie einer oder mehreren Schichten aus SiO₂ (Siliziumdioxid), TiO₂ (Titandioxid) oder SnO₂ (Zinnoxid) versehen werden.

Die die Mikrokapseln aufweisende Schicht des Sicherheitselements gemäß dem dritten Aspekt der Erfindung kann gemäß einer bevorzugten Ausführungsform vollflächig, d.h. als Ganzes, oder zumindest in einem Teilbereich mit einer semitransparenten, optisch variablen Farbschicht versehen sein, die zur Erzeugung eines betrachtungswinkelabhängigen visuellen Eindrucks geeignet ist. Da die erfindungsgemäßen Mikrokapseln gemäß dem ersten Aspekt der Erfindung ihre Lichtdurchlässigkeit in Abhängigkeit von der Magnetfeldstärke variieren, liegen sie ohne Magnetfeld im Wesentlichen lichtundurchlässig vor und der Betrachter nimmt nur die Eigenfarbe der Pigmente oder eine Mischfarbe aus der Pigmentfarbe und der Farbe der Trägerflüssigkeit wahr. Durch die zusätzliche semitransparente, optisch variablen Farbschicht kann die für den Betrachter wahrnehmbare Kapselfarbe in Abhängigkeit vom Betrachtungswinkel verändert werden, insbesondere in Form eines Farbkippeffekts bzw. Farbflops.

Die semitransparente, optisch variable Farbschicht kann insbesondere eine vollflächige Interferenzschicht sein oder einzelne, in einem Bindemittel eingebettete Interferenzschichtpigmente aufweisen.

Interferenzschichten weisen beispielsweise einen Dünnschichtaufbau auf, der eine Reflexionsschicht (insbesondere aus einer reflektierenden Substanz, z.B. ein reflektierendes Metall wie Aluminium oder Kupfer), eine Absorberschicht (insbesondere aus Chrom und/oder Nickel) und eine oder mehrere dazwischen liegende dielektrische Abstandsschichten umfasst. Diese basieren beispielsweise auf Glimmer, auf SiO₂ oder auf Al₂O₃. Solche Interferenzschichten sind im Stand der Technik bekannt (siehe z.B. die WO 2005/108110 und die WO 2008/080499) und werden entsprechend der Anzahl von dielektrischen Schichten als ein- oder mehrschichtig bezeichnet. Druckfarben mit Pigmenten solcher Dünnschicht-Interferenzschichten werden beispielsweise unter dem Namen Iriodin^{®} (einschichtig) oder Colorcrypt^{®} (mehrschichtig) von der Firma Merck KGaA vertrieben. Druckfarben mit mehrschichtigen Interferenzschichtpigmenten werden ferner unter dem Namen OVI^{®} von der Firma SICPA vertrieben.

Interferenzschichten können des Weiteren auf cholesterischen oder anderweitigen Flüssigkristallen beruhen. Schichten und Pigmente, die aus cholesterischen Flüssigkristall-Polymeren (CLCP) hergestellt sind, sind im Stand der Technik bekannt (siehe z.B. die EP 2032672 B1 und der darin zitierte Stand der Technik).

Im Falle einer optisch variablen Farbschicht, die einzelne, in einem Bindemittel eingebettete Interferenzschichtpigmente aufweist, wird bevorzugt, dass die eingebetteten Interferenzschichtpigmente insbesondere von der Gruppe bestehend aus Flüssigkristallpigmenten, Perlglanzpigmenten und Pigmenten mit dem oben beschriebenen Dünnschichtaufbau, der eine Reflexionsschicht, eine Absorberschicht und eine oder mehrere dazwischen liegende dielektrische Abstandsschichten umfasst, gewählt sind. Eine Untergruppe von Interferenzschichten oder Interferenzschichtpigmenten sind cholesterische oder anderweitige Flüssigkristalle, die auch verwendet werden können. Diese liegen beispielsweise als flüssigkristalline Silikonpolymere vor oder auch als Pigmente in so genannten STEP^{®}-Farben ("Shimmery Twin Effect Protection").

Die Erfindung betrifft des Weiteren ein Verfahren zum Herstellen eines Sicherheitselements, umfassend das Bereitstellen eines Sicherheitselements gemäß dem dritten Aspekt der Erfindung und das Behandeln der Mikrokapseln (d.h. die oben beschriebenen ersten und ggf. zweiten Mikrokapseln) in zumindest einem Teilbereich des Sicherheitselements mittels elektromagnetischer Strahlung, insbesondere mittels Laserstrahlung, bevorzugt mittels gepulster Laserstrahlung im nahen Infrarot, wodurch die Kapselhüllen der Mikrokapseln beschädigt werden, so dass die Trägerflüssigkeit aus den Mikrokapseln austritt und die Pigmente unbeweglich in den beschädigten Kapselhüllen zurückbleiben. Die mittels Laserstrahlung behandelten ersten Mikrokapseln sind dabei insbesondere irreversibel in einem wenig lichtdurchlässigen oder lichtundurchlässigen Zustand fixiert. Für den Betrachter ist der unterhalb der die Mikrokapseln aufweisenden Schicht des Sicherheitselements liegende Untergrund, beispielsweise eine farbige oder informationsführende Schicht, somit unsichtbar.

Durch den Einsatz von Laserstrahlung können sehr feine Motivbereiche beliebiger Form erzeugt werden, da die Laserstrahlung bei Bedarf auf einen kleinen Fokusfleck fokussiert werden kann. Die erreichbare Auflösung liegt daher im Bereich von nur wenigen Mikrometern. Anstelle der bevorzugten Laserstrahlung können selbstverständlich auch andere elektromagnetische Strahlungsquellen eingesetzt werden. In allen Gestaltungen kann die Strahlungsbeaufschlagung vollflächig unter Einsatz einer Maske mit den vorgegebenen, für die Strahlung durchlässigen Bereichen zur Beschädigung der Mikrokapseln eingesetzt werden, oder die Beschädigung der Mikrokapseln kann selektiv durch Führung eines geeignet gebündelten Strahls erfolgen. Als Laser kann z.B. ein Nd:YAG-Laser mit einer Wellenlänge von 1064 nm eingesetzt werden.

Die Kapselhüllen der Mikrokapseln gemäß dem ersten Aspekt der Erfindung können sowohl während des Anlegens eines äußeren Magnetfelds, als auch ohne Anlegen eines äußeren Magnetfelds mittels Laser beschädigt werden. In beiden Fällen sind die Stellen des Sicherheitselements, an denen sich mittels Laser beschädigte Mikrokapseln befinden, im Wesentlichen lichtundurchlässig.

Im Falle, dass das Sicherheitselement in einer Bindemittelschicht nicht nur die Mikrokapseln gemäß dem ersten Aspekt der Erfindung (d.h. die ersten Mikrokapseln), sondern auch die oben erwähnten zweiten, plättchenförmige Pigmente enthaltenden Mikrokapseln aufweist, ist der für den Betrachter nach Laserbehandlung visuell erkennbare Effekt infolge der Trägheit der plättchenförmigen Pigmente in den zweiten Mikrokapseln von der Tatsache abhängig, ob die Beschädigung der Mikrokapseln während des Anlegens eines äußeren Magnetfelds oder ohne Anlegen eines äußeren Magnetfelds mittels Laser erfolgte. Im Falle, dass die plättchenförmigen Pigmente der zweiten Mikrokapseln durch Anlegen eines äußeres Magnetfelds parallel zur Ebene der als Matrix dienenden Bindemittelschicht ausgerichtet sind, führt die Laserbestrahlung dazu, dass die plättchenförmigen Pigmente in dieser Ausrichtung durch die Beschädigung der Kapselhüllen fixiert werden. Die parallele Ausrichtung ruft beim Betrachter einen brillanten optischen Effekt hervor.

Die Erfindung betrifft des Weiteren ein Verfahren zum Herstellen eines Sicherheitselements, umfassend das Bereitstellen eines Sicherheitselements gemäß dem dritten Aspekt der Erfindung und das Behandeln der Mikrokapseln in zumindest einem Teilbereich des Sicherheitselements mittels einer vorbestimmten reaktiven Substanz, insbesondere mittels hydrophober Monomere, die durch die Kapselhüllen in die Mikrokapseln eindringt und die in den Mikrokapseln enthaltenen Pigmente durch chemische Reaktion örtlich irreversibel fixiert. Dabei werden die mittels der vorbestimmten reaktiven Substanz behandelten ersten Mikrokapseln insbesondere irreversibel in einem wenig lichtdurchlässigen oder lichtundurchlässigen Zustand fixiert. Das Verfahren gemäß dem fünften Aspekt der Erfindung stellt eine Alternative zu dem oben beschriebenen Verfahren gemäß dem vierten Aspekt der Erfindung dar, bei dem die irreversible Fixierung der Mikrokapseln mittels Laserstrahlung erfolgt. Die Kapselhülle wird mit Vorteil semipermeabel gewählt, das heißt, sie ist für eine oder mehrere Verbindungsklassen oder Verbindungstypen durchlässig, für andere dagegen nicht. Die semipermeable Kapselhülle kann eindringende Moleküle beispielsweise nach Molekülgröße und/oder Polarität und/oder Ladungszustand selektieren. Bevorzugt ist die semipermeable Kapselhülle für kleine unpolare Substanzen durchlässig, für polare Substanzen dagegen undurchlässig. Die Semipermeabilität der Kapselhülle muss nicht ausschließlich von der Kapselhülle selbst herrühren, sondern es ist auch möglich, dass die Trägerflüssigkeit oder das Bindemittel der die Mikrokapseln aufweisenden Schicht des Sicherheitselements zur Semipermeabilität der Kapselhülle beiträgt oder diese sogar überwiegend ausmacht. Beispielsweise kann die Trägerflüssigkeit einen stark hydrophoben Charakter aufweisen, und dazu beispielsweise Kohlenwasserstoffe oder geeignete Triglyceride enthalten. Diese verhindern wirksam das Eindringen stark polarer Substanzen in die Kapsel, während unpolare Stoffe ohne Weiteres durch die Kapselhülle ins Innere eindringen können.

Als reaktive Substanzen werden vorzugsweise strahlenhärtbare Acrylate auf die die Mikrokapseln aufweisende Schicht des Sicherheitselements aufgebracht. Vorteilhaft enthalten die reaktiven Substanzen ein- und/oder zwei- und/oder mehrfunktionale Monomere oder Oligomere. Insbesondere werden als reaktive Substanzen mit Vorteil hydrophobe Monomere aufgebracht, die zweckmäßig ein kleines Molekulargewicht und/oder eine geringe Oberflächenspannung aufweisen. Das Molekulargewicht liegt dabei bevorzugt unterhalb von 500 g/mol, besonders bevorzugt unterhalb von 250 g/mol. Die Oberflächenspannung liegt bevorzugt unterhalb von 38 dyn/cm, besonders bevorzugt unterhalb von 32 dyn/cm.

Einige Beispiele geeigneter reaktiver Substanzen sind Isobornylacrylat, Isooctylacrylat, Laurylacrylat, Hexandioldiacrylat, Isodecylacrylat und Tertiobutylcyclohexanolacrylat. Auch viele als Reaktionsverdünner bekannte Substanzen, wie etwa Vinylcaprolactam oder Vinylpyrrolidon, eignen sich im Rahmen der Erfindung als reaktive Substanzen.

Die reaktiven Substanzen werden zweckmäßig auf die die Mikrokapseln aufweisende Schicht des Sicherheitselements aufgedruckt. Durch die zur Verfügung stehenden hochauflösenden Drucktechniken können hochauflösende Motivbereiche beliebiger Form erzeugt werden. Nach dem Aufbringen der reaktiven Substanzen wird zweckmäßig eine vorbestimmte Wartezeit abgewartet, bevor gehärtet wird, um sicherzustellen, dass die reaktiven Substanzen in die Mikrokapseln eingedrungen sind. Um die Wartezeit zu verkürzen, wird mit Vorteil während der Wartezeit eine Temperaturbeaufschlagung durchgeführt, insbesondere durch Beaufschlagung mit Infrarotstrahlung und/oder Heißluft.

Die Erfindung betrifft des Weiteren ein Verfahren zum Herstellen eines Sicherheitselements zur Absicherung von Wertgegenständen, bei dem auf ein Substrat eine (Bindemittel-)Schicht aufgebracht wird, die eine Vielzahl der erfindungsgemäßen Mikrokapseln enthält.

Die Erfindung betrifft ferner eine Sicherheitsanordnung zur Absicherung von Sicherheitspapieren, Wertdokumenten und dergleichen, mit einem Sicherheitselement der oben beschriebenen Art und mit einem Verifikationselement mit einem Magnetbereich. In dem Magnetbereich liegt vorteilhaft magnetisches Material in Form von Mustern, Linien, Zeichen oder einer Codierung vor. Das von dem magnetischen Material dargestellte Motiv kann offen sichtbar sein oder auch ohne Hilfsmittel verborgen sein, beispielsweise durch Überdeckung mit einer dunklen Druckschicht. Vorzugsweise ist der Magnetbereich im Wesentlichen senkrecht zur Ebene des Verifikationselements magnetisiert.

Die Erfindung umfasst weiter einen Datenträger, insbesondere ein Wertdokument, wie eine Banknote, einen Pass, eine Urkunde, eine Ausweiskarte oder dergleichen, der mit einem Sicherheitselement der beschriebenen Art oder mit einer Sicherheitsanordnung der beschriebenen Art ausgestattet ist. Enthält der Datenträger sowohl ein erfindungsgemäßes Sicherheitselement als auch ein zugehöriges Verifikationselement, so sind diese mit Vorteil geometrisch so auf dem Datenträger angeordnet, dass das Sicherheitselement durch Biegen oder Falten des Datenträgers oberhalb des Verifikationselements in Position gebracht werden kann.

Bei dem Datenträger in Form einer Banknote kann es sich insbesondere um eine Papierbanknote, Polymer- bzw. Kunststoffbanknote oder eine Folien-Papier-Verbundbanknote handeln. Bei dem Datenträger in Form einer Ausweiskarte kann es sich mit Vorteil um eine Kreditkarte, Bankkarte, eine Barzahlungskarte, eine Berechtigungskarte, einen Personalausweis oder eine Pass-Personalisierungsseite handeln.

Der Datenträger, wie etwa eine Banknote, kann das erfindungsgemäße Sicherheitselement bzw. die erfindungsgemäßen Mikrokapseln innerhalb eines in den Datenträger eingebrachten Durchsichtsfensters (bzw. Loch oder Aussparung oder Öffnung) aufweisen. Beispielsweise kann der Datenträger ein in das Trägersubstrat eingebrachtes Loch aufweisen, wobei das Loch auf der Vorderseite und der Rückseite mit jeweils einer Vorderseitenfolie bzw. Rückseitenfolie abgedeckt ist und das erfindungsgemäße Sicherheitselement bzw. die erfindungsgemäßen Mikrokapseln innerhalb der beiden Folien angeordnet sind. Darüber hinaus kann der Datenträger das erfindungsgemäße Sicherheitselement bzw. die erfindungsgemäßen Mikrokapseln oberhalb eines in den Datenträger eingebrachten Durchsichtsfensters, z.B. in Form eines folienartigen Sicherheitselements, das im Bereich des Durchsichtsfenster auf den Datenträger aufgebracht ist, aufweisen. Die erfindungsgemäßen Mikrokapseln können des Weiteren in pulverisierter Form innerhalb des Datenträgers enthalten sein. Im Falle eines Datenträgers auf Papierbasis können die Mikrokapseln z.B. pulverförmig in den Papierbrei während der Herstellung des Datenträgers eingebracht werden. Im Falle eines Datenträgers in Form einer Karte, wie etwa eine Ausweiskarte, können die Mikrokapseln z.B. pulverförmig im Extruder zur Erzeugung einer Folie zugeführt werden.

Darüber hinaus kann das erfindungsgemäße Sicherheitselement aber auch zur Sicherung von Produkten jeglicher Art, also zur sogenannten Produktsicherung verwendet werden. Z.B. können mit dem erfindungsgemäßen Sicherheitselement Verpackungen jeglicher Art gegen Nachahmung geschützt werden. Auch kann das erfindungsgemäße Sicherheitselement neben dem Produktschutz mit Vorteil für den Markenschutz verwendet werden.

Die erfindungsgemäßen Mikrokapseln sowie das erfindungsgemäße Sicherheitselement können zur Absicherung von Wertgegenständen verwendet werden, wobei der Echtheitsnachweis nicht allein visuell durch den Betrachter, sondern infolge der magnetischen Eigenschaften der Mikrokapseln auch maschinell mittels maschinenlesbarer Sensoren erfolgen kann.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement,
- Fig. 2: einen Querschnitt durch ein Sicherheitselement nach einem Ausführungsbeispiel der Erfindung, in der linken Bildhälfte ohne und in der rechten Bildhälfte mit Verifikationseinrichtung,
- Fig. 3: schematisch zwei aus der die Mikrokapseln aufweisenden Schicht der Fig. 2 herausgegriffene Mikrokapseln mit ihren Bestandteilen im Querschnitt,
- Fig. 4: die Mikrokapseln der Fig. 3 bei der Betrachtung im Auflicht,
- Fig. 5: in (a) und (b) eine Banknote mit einer erfindungsgemäßen Sicherheitsanordnung aus einem Sicherheitselement und einem spiegelbildlich zur Mittellinie angeordneten Verifikationselement,
- Fig. 6: in (a) eine Identifikationskarte mit einem erfindungsgemäßen Sicherheitselement, in (b) eine Kartenaufnahme mit einer Verifikationseinrichtung für die Identifikationskarte von (a) und in (c) die Kartenaufnahme mit eingelegter Identifikationskarte,
- Fig. 7: eine Identifikationskarte mit einer weiteren erfindungsgemäßen Sicherheitsanordnung,
- Fig. 8: Mikrokapseln eines weiteren, erfindungsgemäßen Sicherheitselements bei der Betrachtung im Auflicht, in (a) im Zustand ohne Einwirkung eines äußeren Magnetfelds, in (b) während des Anlegens eines äußeren Magnetfelds,
- Fig. 9: einen Querschnitt durch ein Sicherheitselement nach einem weiteren Ausführungsbeispiel der Erfindung, und
- Fig. 10: einen Querschnitt durch ein Sicherheitselement nach einem weiteren Ausführungsbeispiel der Erfindung.

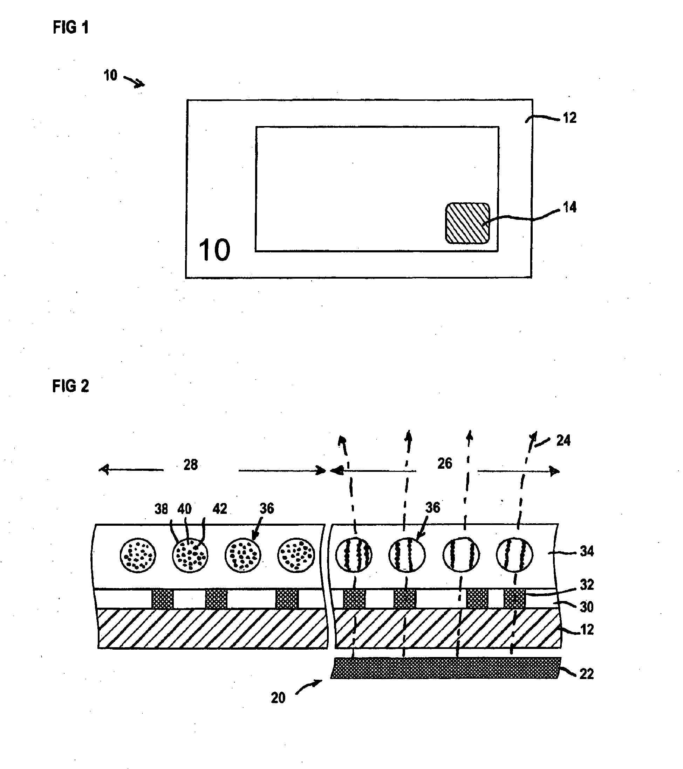

Die Erfindung wird nun am Beispiel von Sicherheitselementen für Banknoten und andere Wertdokumente erläutert. Fig. 1 zeigt dazu eine schematische Darstellung einer Banknote 10 mit einem direkt auf das Banknotenpapier 12 aufgedruckten Sicherheitselement 14. Die Erfindung ist allerdings nicht auf aufgedruckte Sicherheitselemente und Banknoten beschränkt, sondern kann bei allen Arten von Sicherheitselementen eingesetzt werden, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben aufgedruckten Elementen beispielsweise auch Transferelemente, Sicherheitsfäden oder Sicherheitsstreifen und neben Aufsichtselementen auch Durchsichtselemente infrage.

Das Sicherheitselement 14 weist ein reversibles und durch eine magnetische Verifikationseinrichtung 20 (siehe Fig. 2) interaktiv auslösbares Echtheitskennzeichen auf. Ohne Verifikationseinrichtung bzw. mit einem ausreichenden räumlichen Abstand von der Verifikationseinrichtung zeigt das Sicherheitselement 14 eine dunkle, lichtundurchlässige Farbe.

Die Verifikationseinrichtung 20 enthält im Ausführungsbeispiel einen starken Permanentmagneten 22 aus einer Neodym-Eisen-Bor-Legierung, der in Form von Mustern, Linien, Zeichen oder einer Codierung, beispielsweise in Form der Buchstaben "OK" gestaltet ist. Die Oberseite des Magneten 22 bildet dabei einen magnetischen Nordpol und die Unterseite einen magnetischen Südpol, so dass die Magnetfeldlinien 24 des Magneten 22 im Wesentlichen senkrecht auf der Ebene des Magneten 22 stehen.

Wird das Sicherheitselement 14 nun durch den Benutzer unmittelbar über den Magneten 22 der Verifikationseinrichtung 20 gebracht, so wird das visuelle Erscheinungsbild des Sicherheitselements 14 interaktiv verändert. In einem Bereich unmittelbar über dem Magneten 22, der die Form des von dem Magneten 22 dargestellten Motivs, hier beispielsweise die Form der Buchstaben "OK" aufweist, wird die dunkle, lichtundurchlässige Farbe des Sicherheitselements deutlich reduziert und eine farbige oder informationsführende Untergrundschicht wird sichtbar. Diese visuelle Änderung ist vollständig reversibel. Wird das Sicherheitselement 14 nämlich wieder von der Verifikationseinrichtung 20 entfernt, stellt sich nach kurzer Zeit der Ausgangszustand mit der dunklen, lichtundurchlässigen Farbe des Sicherheitselements 14 wieder ein.

Der Aufbau eines erfindungsgemäßen Sicherheitselements 14 und das Zustandekommen der reversiblen Änderung des visuellen Erscheinungsbilds werden nun mit Bezug auf die Querschnittsdarstellung der Fig. 2 genauer erläutert. Dabei zeigt die linke Bildhälfte der Figur das Sicherheitselement 14 ohne Verifikationseinrichtung 20 bzw. einen Bereich 28 abseits des Magneten 22, während die rechte Bildhälfte einen Bereichs 26 des Sicherheitselements zeigt, der sich unmittelbar über dem Magneten 22 befindet.

Auf das Banknotenpapier 12 der Banknote 10 ist im Bereich des Sicherheitselements 14 eine Druckschicht 30 aufgebracht, die eine beliebige Information, wie etwa ein Linienmuster 32, eine alphanumerische Zeichenfolge, ein Logo, ein Portrait oder dergleichen darstellen kann. Über diese Druckschicht 30 ist im Siebdruckverfahren eine unter Normalbedingungen, d.h. ohne Einwirkung eines äußeren Magnetfelds, dunkle, wenig lichtdurchlässige Schicht 34 aufgebracht.

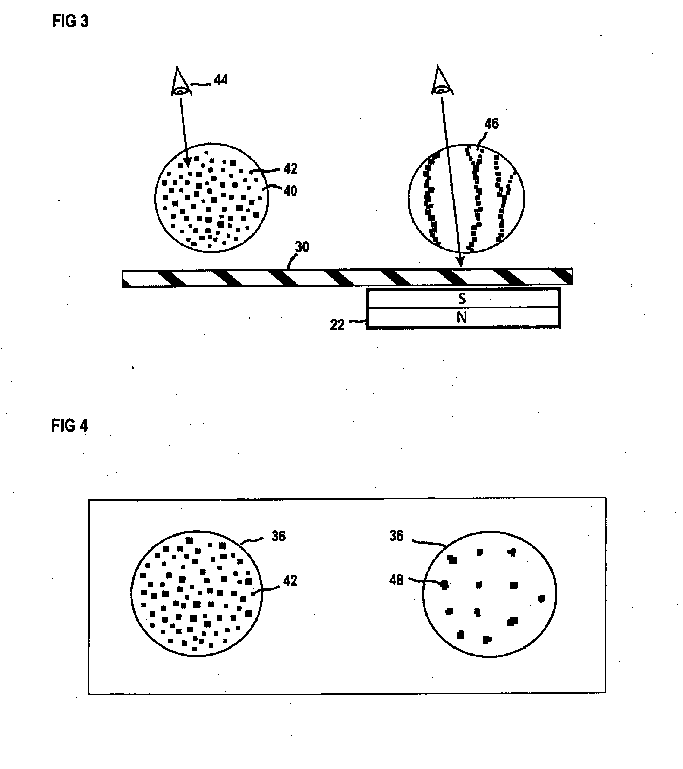

Die Schicht 34 ist eine Druckschicht mit einem Bindemittel und einer darin eingebrachten Vielzahl von Mikrokapseln 36, die jeweils eine Kapselhülle 38, eine in der Kapselhülle 38 eingeschlossene lichtdurchlässige Trägerflüssigkeit 40 und eine Vielzahl eines magnetischen, lichtundurchlässigen Pigments 42 aufweisen. Wie am besten in der Detaildarstellung der Fig. 3 zu erkennen, ist das Pigment 42 dabei in der Mikrokapsel im Wesentlichen frei beweglich und durch ein äußeres Magnetfeld, wie etwa das Feld 24 des Permanentmagneten 22, reversibel ausrichtbar.

Im Ausführungsbeispiel der Figuren 2 und 3 stellen die Pigmente 42 Magnetit-Pigmente dar. Pigmente dieser Art sind beispielsweise unter dem Handelsnamen Magnetpigment 345 der Firma BASF erhältlich.

Da die Pigmente 42 innerhalb der Kapselhülle 38 im Wesentlichen frei beweglich sind, weisen sie ohne äußeres Magnetfeld keine Vorzugsorientierung auf, sondern sind unregelmäßig in der Trägerflüssigkeit 40 verteilt. Die unregelmäßige Verteilung der Pigmente 42 ist in der linken Bildhälfte der Fig. 3 schematisch dargestellt. Die Druckschicht 30 ist für den Betrachter 44 nicht sichtbar, weil die Pigmente 42 in den Mikrokapseln derart unregelmäßig verteilt vorliegen, dass nahezu das sämtliche Licht absorbiert bzw. stark gestreut wird. Die Mikrokapseln erscheinen damit im Auflicht für den Betrachter 44 in der Eigenfarbe der magnetischen Pigmente 42.

Im Bereich 26 unmittelbar über dem Magneten 22 werden die magnetischen, lichtundurchlässigen Pigmente 42 dagegen entlang der magnetischen Feldlinien ausgerichtet und bilden leicht verzweigte Ketten 46. In einer Mikrokapsel entstehen mehrere dieser Ketten, die aber voneinander getrennt nebeneinander angeordnet sind. Die Abstände zwischen den einzelnen Ketten beträgt ein Vielfaches des Pigmentdurchmessers, so dass zwischen den Ketten Licht in Magnetfeldrichtung hindurch gehen kann. Die Mikrokapseln erscheinen bei der Betrachtung im Auflicht in der Farbe des Untergrundes, nämlich der Druckschicht 30.

Wie die Fig. 4 zeigt, ist bei der Betrachtung im Auflicht ohne Einwirkung eines äußeren Magnetfelds die unregelmäßige Verteilung der Pigmente 42 und damit die opake Farbe der Mikrokapsel 36 zu sehen (siehe die linke Bildhälfte der Fig. 4). Bei einem angelegten Magnetfeld ist in Blickrichtung eine säulenartige Struktur 48 der kettenförmig ausgerichteten magnetischen Pigmente sichtbar, die den Blick auf den Untergrund, nämlich die Druckschicht 30, in einem engen Betrachtungswinkel freigibt.

In dem in den Figuren 2 bis 4 gezeigten Ausführungsbeispiel wurde die Mikroverkapselung gemäß dem nachfolgenden Syntheseprotokoll durchgeführt:

Magnetpigment 345 der Firma BASF mit einem mittleren Teilchendurchmesser von etwa 1µm wird zu 10 Gew.-% in pflanzlichem Öl unter Zugabe eines amphiphilen Dispergiermittels mit einem HLB-Wert von < 2 dispergiert. Das erhaltene Gemisch wird anschließend mittels eines Rotor-Stator-Rührgeräts emulgiert und nach dem in der US 2,800,457 beschriebenen Verfahren mittels komplexer Koazervierung verkapselt. Die Produktionsbedingungen werden so gewählt, dass Kapseln mit einem mittleren Teilchendurchmesser von etwa 60 µm entstehen. Nach Abschluss der Verkapselung werden die Kapseln mit Glutaraldehyd-Lösung (25 Prozent in Wasser) gehärtet, isoliert, mehrfach gewaschen und anschließend in ein wässriges Dispersionsbindemittel eingebracht. Die so gewonnene Druckfarbe kann im Siebdruck auf Papier appliziert werden und zeigt nach der Trocknung des Bindemittels das gewünschte Verhalten.

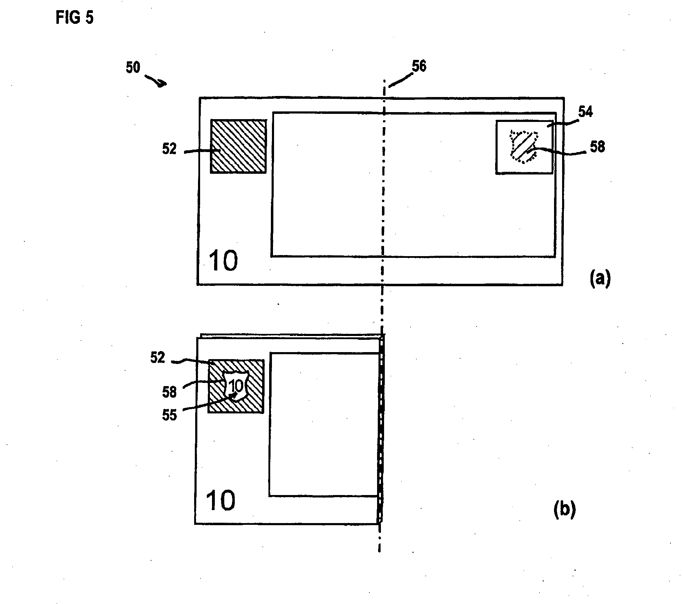

Bei der mit Bezug auf Fig. 2 beschriebenen Ausgestaltung erfolgt die Echtheitsprüfung des Sicherheitselements 14 mit einer separaten Verifikationseinrichtung 20. Es ist jedoch auch möglich, für die Echteitsprüfung ein Verifikationselement auf einer Banknote selbst vorzusehen, so dass das Sicherheitselement und das Verifikationselement eine zusammengehörige Sicherheitsanordnung bilden, wie nunmehr anhand des Ausführungsbeispiels der Fig. 5 erläutert.

Die in Fig. 5(a) gezeigte Banknote 50 enthält ein Sicherheitselement 52 der oben beschriebenen Art sowie ein Verifikationselement 54, das bezüglich der Mittellinie 56 der Banknote 50 spiegelsymmetrisch zu dem Sicherheitselement 52 aufgebracht ist. Das Verifikationselement 54 weist einen Magnetbereich 58 auf, in dem magnetisches Material mit einer Magnetisierung senkrecht zur Papierebene und in Form eines gewünschten Motivs, wie etwa des in Fig. 5(a) dargestellten Wappens, vorliegt. Die Motivform des Magnetbereichs 58 kann offen sichtbar sein oder auch verdeckt sein, beispielsweise durch einen dunklen Überdruck.

Durch Falten der Banknote 50 um die Mittellinie 56 kommt das Verifikationselement 56 mit seinem Magnetbereich 58 auf dem Sicherheitselement 52 zu liegen, wie in Fig. 5(b) gezeigt. Durch die Magnetisierung des Magnetbereichs 58 wird der visuelle Eindruck des Sicherheitselements 52 in der oben beschriebenen Art interaktiv und reversibel verändert. Insbesondere zeigt das Sicherheitselement 52 bei der Überlagerung das Wappenmotiv des Magnetbereichs 58. Im Innern des Wappenmotivs können auch weitere Informationen, wie etwa die Denomination 55 der Banknote, sichtbar werden. Die Banknote 50 kann daher durch einfaches Falten auf Echtheit geprüft werden, ohne dass externe Verifikationsmittel erforderlich wären.

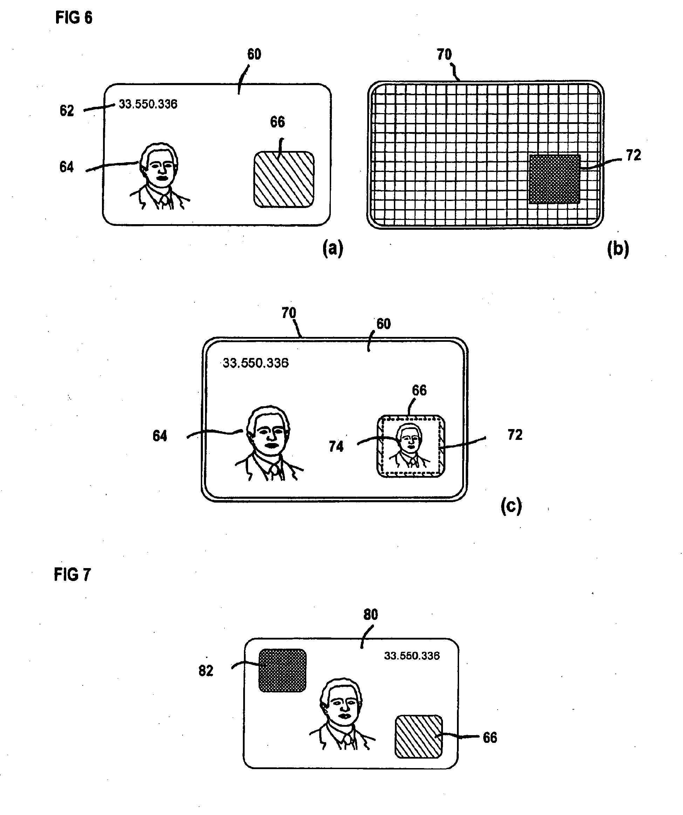

Die Erfindung kann auch bei Karten vorteilhaft eingesetzt werden, wie anhand des Ausführungsbeispiels der Fig. 6 illustriert. Fig. 6(a) zeigt eine Aufsicht auf eine Identifikationskarte 60, wie etwa eine Ausweiskarte, Bankkarte, Kreditkarte oder einen Führerschein. Die Identifikationskarte 60 enthält typischerweise eine oder mehrere offene Kennzeichnungen, beispielsweise eine Seriennummer 62 und/oder ein Portrait 64 des Karteninhabers.

Zusätzlich enthält die Identifikationskarte 60 ein erfindungsgemäßes Sicherheitselement 66, das im Ausführungsbeispiel durch eine Druckschicht mit einer zweiten verkleinerten Portraitdarstellung des Karteninhabers und eine auf die zweite Portraitdarstellung aufgedruckte, die Mikrokapseln aufweisende Schicht der in Zusammenhang mit Fig. 2 beschriebenen Art gebildet ist. Wegen der unregelmäßigen Verteilung der verkapselten Pigmente 42 ist die die Mikrokapseln aufweisende Schicht unter Normalbedingungen opak, so dass die zweite Portraitdarstellung für einen Betrachter verborgen ist (Fig. 6(a)).

Zur Authentifizierung wird die Identifikationskarte 60 in eine zugehörige Kartenaufnahme 70 gelegt, die, wie in Fig. 6(b) gezeigt, als Verifikationseinrichtung einen auf die Lage, Größe und Form des Sicherheitselements 66 abgestimmten Permanentmagneten 72 enthält. Bei einer echten Identifikationskarte 60 werden die magnetisch ausrichtbaren Pigmente 42 durch die Magnetisierung des Magneten 72 senkrecht zur Ebene des Sicherheitselements 66 ausgerichtet und geben dadurch den Blick auf die zweite Portraitdarstellung 74 frei, wie in Fig. 6(c) dargestellt. Das Erscheinen der zweiten Portraitdarstellung 74 und die Übereinstimmung mit dem ersten Portrait 64 kann somit zur Echtheitsprüfung der Karte 60 und als Berechtigungsnachweis des Karteninhabers eingesetzt werden.

Es versteht sich, dass die Echtheitsprüfung auch auf andere Weise erfolgen kann. Beispielsweise kann der Permanentmagnet 72 selbst in Form eines Motivs, etwa der Buchstaben "OK" ausgebildet sein, wobei das Motiv des Permanentmagneten 72 beim Einlegen einer echten Identifikationskarte 60 in die Kartenaufnahme 70 im Sicherheitselement 66 erscheint.

Mit Bezug auf Fig. 7 können Identifikationskarten 80 auch in einem weiteren Bereich selbst ein Verifikationselement 82 mit einem motivförmigen Magnetbereich enthalten, mit dem das Sicherheitselement 66 einer zweiten Karte 80 geprüft werden kann. Zur Authentifizierung wird die zweite Karte um 180° gedreht auf die erste Karte aufgelegt, so dass das Sicherheitselement 66 der zweiten Karte auf das Verifikationselement 82 der ersten Karte zu liegen kommt. Das Motiv des Verifikationselements 82 der ersten Karte wird dann in dem Sicherheitselement 66 der zweiten Karte sichtbar. Auf diese Weise können sich zwei Identifikationskarten 80 gegenseitig verifizieren.

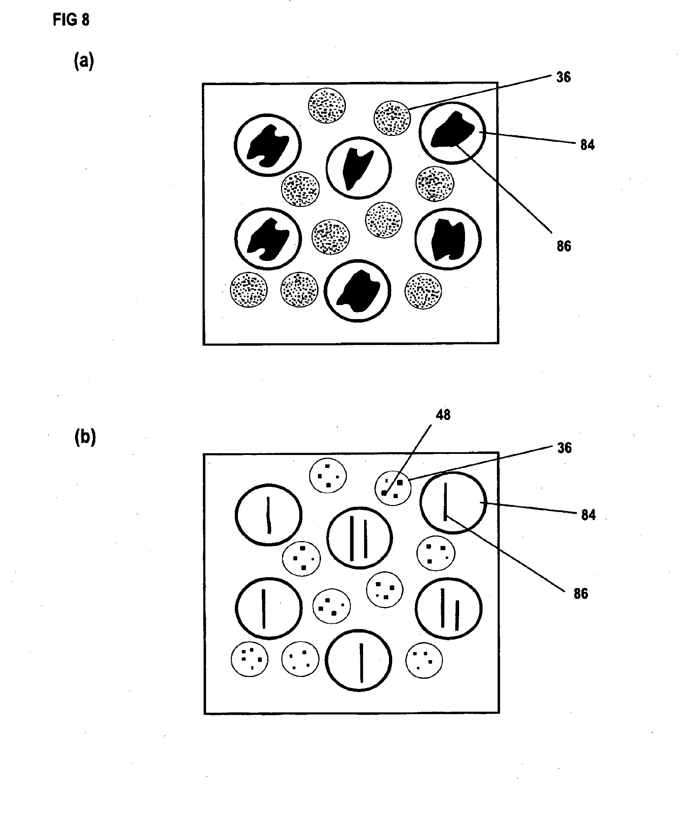

Fig.8 zeigt Mikrokapseln eines weiteren, erfindungsgemäßen Sicherheitselements bei der Betrachtung im Auflicht, in (a) im Zustand ohne Einwirkung eines äußeren Magnetfelds, in (b) bei Einwirkung eines äußeren Magnetfeld. Das Sicherheitselement hat im Wesentlichen den gleichen Aufbau wie das in der Fig. 2 gezeigte Sicherheitselement, wobei die Bindemittelschicht 34 nicht nur Mikrokapseln 36 gemäß dem ersten Aspekt der vorliegenden Erfindung aufweist, sondern auch zweite Mikrokapseln 84, die innerhalb ihrer Kapselhüllen magnetische plättchenförmige Pigmente 86 enthalten. Im vorliegenden Fall ist das Pigment 86 ein magnetisches Mehrschichtpigment mit Al₂O₃, nämlich Korund, als Trägermaterial und einer Interferenzbeschichtung aus Fe₃O₄ und einem geringen Anteil Magnesiumoxid. Ein solches Mehrschichtpigment weist einen goldenen Farbton auf. Die zweiten Mikrokapseln 84 sind zusammen mit den ersten Mikrokapseln 36 gemäß dem ersten Aspekt der vorliegenden Erfindung in einem Bindemittel eingebracht und im Sieb-, Flexo- oder Tiefdruck verdruckt worden. Die ersten Mikrokapseln 36 ermöglichen in Abhängigkeit vom angelegten Magnetfeld eine Änderung der Lichtdurchlässigkeit. Die zweiten Mikrokapseln 84 ermöglichen, bedingt durch die Ausrichtung der darin enthaltenen magnetischen plättchenförmigen Pigmente 86 im Magnetfeld, zusätzliche Effekte, wie etwa einen Goldglanz oder den visuellen Eindruck einer dreidimensionalen Tiefe.

Im Zustand ohne Einwirkung eines äußeren Magnetfelds (siehe Fig. 8 (a)) sind die plättchenförmigen Pigmente 86 innerhalb der zweiten Mikrokapseln 84 im Wesentlichen isotrop ausgerichtet, weisen also als Gesamtheit keine Vorzugsrichtung auf. Im Gegensatz zu den ersten Mikrokapseln 36, die den Untergrund (siehe die Bezugsnummer 30 in Fig. 2) bei der Betrachtung des Sicherheitselements im Auflicht nahezu perfekt abdecken, decken die zweiten Mikrokapseln 84 den Untergrund nicht allzu perfekt ab, weil die plättchenförmigen Pigmente 86 der zweiten Mikrokapseln 84 den Kapselquerschnitt nicht so gut ausfüllen wie die sphärischen magnetischen Pigmente (siehe die Bezugsnummer 42 in Fig. 2) der ersten Mikrokapseln 36.

Im Zustand der Einwirkung eines äußeren Magnetfelds (siehe Fig. 8 (b)) werden die magnetischen, lichtundurchlässigen Pigmente 42 in den ersten Mikrokapseln 36 entlang der magnetischen Feldlinien ausgerichtet und bilden Ketten, die im Auflicht als Säulen 48 erkennbar sind. Die Mikrokapseln 36 weisen nun einen lichtdurchlässigen Zustand auf, so dass der Betrachter den Untergrund wahrnehmen kann. Die plättchenförmigen magnetischen Pigmente 86 in den zweiten Mikrokapseln 84 weisen eine annähernd senkrechte Orientierung relativ zur Schichtebene auf und geben, ähnlich wie die Lamellen einer Jalousie, den Blick auf den darunterliegenden Untergrund weitgehend frei.

Anhand der Fig. 8 ist zu erkennen, dass die ersten Mikrokapseln 36 und die zweiten Mikrokapseln 84 eine unterschiedliche Größe aufweisen. Auf diese Weise kann eine sehr vorteilhafte Abdeckung des Untergrunds erreicht werden, weil die kleineren Kapseln 36 die zwischen den großen Kapseln 84 bestehenden Leerstellen optimal ausfüllen können.

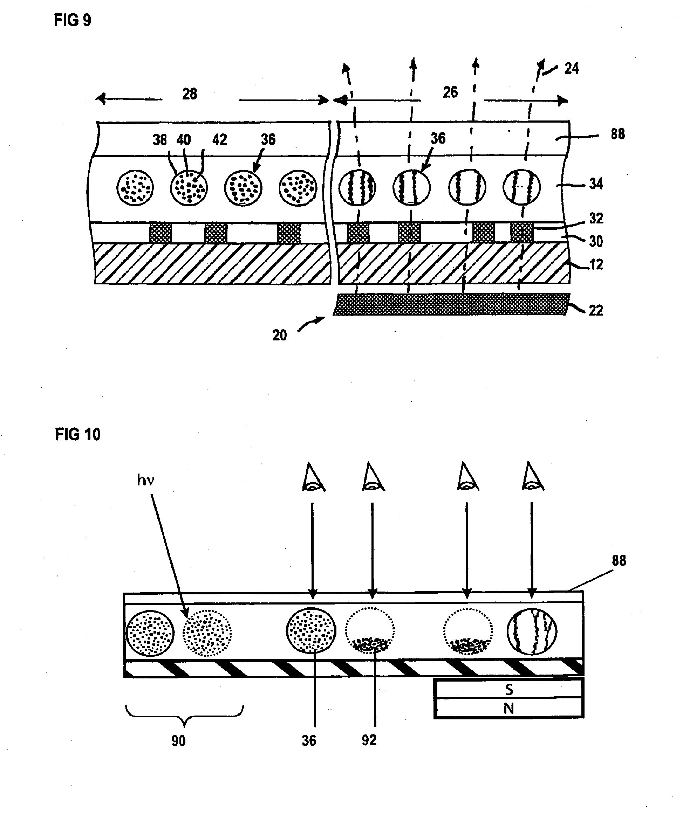

Fig. 9 zeigt einen Querschnitt durch ein Sicherheitselement nach einem weiteren Ausführungsbeispiel der Erfindung. Das Sicherheitselement hat im Wesentlichen den gleichen Aufbau wie das in der Fig. 2 gezeigte Sicherheitselement, wobei als oberste Schicht eine zusätzliche semitransparente, optisch variable Farbschicht 88 vollflächig angeordnet ist. Die Schicht 88 kann z.B. mittels Nass- oder Trockenoffsetdruck, Flexodruck, Stichtiefdruck oder Siebdruck aufgebracht werden. Die Schicht 88 umfasst z.B. ein Bindemittel mit darin eingebetteten Flüssigkristallpigmenten oder Perlglanzpigmenten.

In der linken Bildhälfte der Fig. 9 weist das Sicherheitselement im Auflicht eine dunkle, lichtundurchlässige Farbe auf; die sich zum Teil durch die Eigenfarbe der magnetischen Pigmente 42 ergibt. Durch die zusätzliche semitransparente, optisch variable Farbschicht 88 wird die für den Betrachter wahrnehmbare Farbe zusätzlich, je nach Betrachtungswinkel, verändert. Je nach Wahl der Zusammensetzung für die Schicht 88 kann z.B. ein rot-grün-Farbkippeffekt oder ein grün-blau-Farbkippeffekt erzeugt werden.

In der rechten Bildhälfte der Fig. 9 ist die dunkle, lichtundurchlässige Farbe des Sicherheitselements deutlich reduziert und eine farbige oder informationsführende Untergrundschicht 30 wird sichtbar. Die semitransparente, optisch variable Farbschicht 88 ist für den Betrachter kaum erkennbar.

In dem in der Fig. 9 gezeigten Beispiel ist die zusätzliche semitransparente, optisch variable Farbschicht 88 vollflächig oberhalb des Sicherheitselements angeordnet. Alternativ kann die Schicht 88 auch nur in einem Teilbereich des Sicherheitselements angeordnet sein. Darüber hinaus kann die Bindemittelschicht 34 zusätzlich zu den Mikrokapseln 36 gemäß dem ersten Aspekt der vorliegenden Erfindung die in der Fig. 8 gezeigten zweiten Mikrokapseln 84 aufweisen.

Fig. 10 zeigt einen Querschnitt durch ein Sicherheitselement nach einem weiteren Ausführungsbeispiel der Erfindung. Das Sicherheitselement hat im Wesentlichen den gleichen Aufbau wie das in der Fig. 2 gezeigte Sicherheitselement, wobei die Mikrokapseln 36 an einigen Stellen des Sicherheitselements durch Einwirkung von Laserstrahlung behandelt worden sind und beschädigte Mikrokapseln 92 ausbilden. Die beschädigten Mikrokapseln 92 sind lichtundurchlässig und zeigen unter dem Einfluss eines Magnetfelds keine Veränderung, sind also in ihrer Lichtundurchlässigkeit fixiert. Die Zerstörung der Mikrokapseln 36 erfolgt durch Interaktion der Laserstrahlung mit der Kapselwand und/oder der Trägerflüssigkeit und/oder der Pigmente. Die Kapselwand und/oder die Trägerflüssigkeit können ggf. mit einem Infrarotabsorber, z.B. Ruß, versetzt werden, um den Effekt zu verstärken.

Der linke Bereich 90 der Fig. 10 zeigt Laserstrahlung hv, die eine Mikrokapsel 36 trifft, so dass die Kapselwand durch die Laserstrahlung selbst und/oder durch sekundäre Prozesse, wie etwa Erhitzung der Trägerflüssigkeit oder des Pigments, zumindest in Teilbereichen zerstört wird (in der Fig. 10 durch eine punktierte Linie gezeigt). Als Folge kommt es zu einem Auslaufen von Trägerflüssigkeit und die Mikrokapseln werden im Magnetfeld inaktiv. Ohne angelegtes äußeres Magnetfeld erscheinen sowohl die beschädigte Kapsel 92, als auch die unbeschädigte Mikrokapsel 36 dunkel bzw. in der Eigenfarbe des Pigments, ggf. in Kombination mit der eventuell vorhandenen semitransparenten, optisch variablen Farbschicht 88 (siehe der mittlere Bereich der Fig. 10). Wird ein Magnetfeld angelegt (siehe der rechte Bereich der Fig. 10), bleiben die zerstörten Mikrokapseln 92 lichtundurchlässig, während die unbeschädigten Mikrokapseln 36 lichtdurchlässig werden.

Die figurative Zerstörung von Mikrokapseln 36 in der Bindemittelschicht 34 des in Fig. 2 gezeigten Sicherheitselements mittels Laserstrahlung in Form eines Musters bzw. Bildes oder in Form von Zeichen ist eine vorteilhafte Methode für das Einbringen einer versteckten Information. Insbesondere kann auf das Einbringen einer Untergrundinformation, wie etwa die Druckschicht 30, verzichtet werden, weil die versteckte Information nachträglich eingebracht werden kann.

In dem in der Fig. 10 gezeigten Beispiel erfolgte die Beschädigung der Mikrokapseln 36 mittels Laser. Alternativ kann die Beschädigung durch Aufbringen einer geeigneten reaktiven Substanz auf die die Mikrokapseln 36 aufweisende Bindemittelschicht 34 erfolgen.

### Bezugszeichenliste

- 10: Banknote
- 12: Banknotenpapier
- 14: Sicherheitselement
- 20: Verifikationseinrichtung
- 22: Permanentmagnet
- 24: Magnetfeldlinien
- 30: Druckschicht
- 32: Linienmuster
- 34: Schicht, die die Mikrokapeln aufweist
- 36: Mikrokapseln
- 38: Kapselhülle
- 40: Trägerflüssigkeit
- 42: magnetisches Pigment
- 44: Betrachter
- 46: kettenförmige Ausrichtung
- 48: säulenförmige Struktur
- 50: Banknote
- 52: Sicherheitselement
- 54: Verifikationselement
- 55: Denomination
- 56: Mittellinie
- 58: Magnetbereich
- 60: Identifikationskarte
- 62: Seriennummer
- 64: Portrait
- 66: Sicherheitselement
- 70: Kartenaufnahme
- 72: Permanentmagnet
- 74: zweite Portraitdarstellung
- 80: Identifikationskarte
- 82: Verifikationselement
- 84: zweite Mikrokapseln
- 86: plättchenförmiges Magnetpigment
- 88: semitransparente, optisch variable Farbschicht
- 90: Prozess der Inaktivierung einer Mikrokapseln mittels Laser
- 92: beschädigte Mikrokapsel

## Patentansprüche

1. Mikrokapsel, deren Lichtdurchlässigkeit durch Anlegen eines äußeren Magnetfelds reversibel intensivierbar ist, umfassend eine Kapselhülle, in die ein lichtdurchlässiges Trägermedium, insbesondere eine lichtdurchlässige Trägerflüssigkeit, und eine Vielzahl von magnetischen, lichtundurchlässigen Pigmenten mit einem mittleren Teilchendurchmesser in einem Bereich von 0,1 µm bis 10 µm eingeschlossen sind, wobei die Pigmente so angepasst sind, dass sie ohne äußeres Magnetfeld ungeordnet vorliegen und beim Anlegen eines Magnetfelds in eindimensional geordneter Form, insbesondere in Form von Ketten aus Pigmenten, vorliegen.

2. Mikrokapsel nach Anspruch 1, wobei die Pigmente Metalloxidpigmente, bevorzugt Eisenoxidpigmente, sind; und/ oder
die Pigmente sphärische Pigmente sind und das Verhältnis des größten zum kleinsten Durchmesser nicht mehr als 4:1 beträgt; und/ oder
die Trägerflüssigkeit eine hydrophobe Trägerflüssigkeit ist, die 0 bis 50 Gew.-% eines amphiphilen Additivs und 0 bis 20 Gew.-% generelle Additive, die insbesondere von Verdickern, Farbstoffen, Konservierungsstoffen, Oxidationsschutzstoffen oder Dispergierhilfsmitteln gewählt sind, aufweist.

3. Sicherheitselement, das zur Absicherung von Wertgegenständen geeignet ist und dessen Lichtdurchlässigkeit durch Anlegen eines äußeren Magnetfelds reversibel intensivierbar ist, mit einer Schicht, die eine Vielzahl von ersten Mikrokapseln nach Anspruch 1 oder 2 aufweist.

4. Sicherheitselement nach Anspruch 3, wobei die Mikrokapseln einen mittleren Teilchendurchmesser in einem Bereich von 2 bis 150 µm aufweisen; und/oder die Mikrokapseln in einem Bindemittel eingebracht sind; und/ oder die die Mikrokapseln aufweisende Schicht auf einer informationsführenden Untergrundschicht, die vorzugsweise in Form von Mustern, Zeichen oder einer Codierung vorliegt, aufgebracht ist und die informationsführende Untergrundschicht insbesondere eine Offsetdruckschicht, Siebdruckschicht, Flexodruckschicht oder Stichtiefdruckschicht ist.

5. Sicherheitselement nach Anspruch 3 oder 4, wobei die die Mikrokapseln aufweisende Schicht neben den ersten Mikrokapseln zusätzlich eine Vielzahl von zweiten Mikrokapseln aufweist, wobei die zweiten Mikrokapseln jeweils eine Kapselhülle, eine in der Kapselhülle eingeschlossene Trägerflüssigkeit und zumindest ein magnetisch ausrichtbares plättchenförmiges Pigment aufweisen und das magnetisch ausrichtbare plättchenförmige Pigment in der Mikrokapsel im Wesentlichen frei drehbar und durch ein äußeres Magnetfeld reversibel ausrichtbar ist und bevorzugt mehrschichtig mit zumindest einer magnetischen Schicht und mit zumindest einer nichtmagnetischen Schicht ausgebildet ist.

6. Sicherheitselement nach Anspruch 5, wobei die plättchenförmigen Pigmente in den zweiten Mikrokapseln magnetische Interferenzpigmente mit einer Fabry-Perot-Struktur, magnetische oxidische Mehrschichtpigmente und/oder beschichtete magnetische Reineisenpigmente sind.

7. Sicherheitselement nach einem der Ansprüche 3 bis 6, wobei die die Mikrokapseln aufweisende Schicht zumindest in einem Teilbereich mit einer semitransparenten, optisch variablen Farbschicht versehen ist, die zur Erzeugung eines betrachtungswinkelabhängigen visuellen Eindrucks geeignet ist.

8. Sicherheitselement nach Anspruch 7, wobei die semitransparente, optisch variable Farbschicht eine vollflächige Interferenzschicht oder in einem Bindemittel eingebettete Interferenzschichtpigmente aufweist und die eingebetteten Interferenzschichtpigmente insbesondere von der Gruppe bestehend aus Flüssigkristallpigmenten, Perlglanzpigmenten und Pigmenten mit einem Dünnschichtaufbau, der eine Reflexionsschicht, eine Absorberschicht und eine oder mehrere dazwischen liegende dielektrische Abstandsschichten umfasst, gewählt sein können.

9. Verfahren zum Herstellen eines Sicherheitselements, umfassend
das Bereitstellen eines Sicherheitselements, das einen gemäß einem der AnSprüche 3 bis 8 definierten Aufbau aufweist, und
das Behandeln der ersten Mikrokapseln und ggf. der zweiten Mikrokapseln in zumindest einem Teilbereich des Sicherheitselements mittels Laserstrahlung, insbesondere mittels gepulster Laserstrahlung im nahen Infrarot, wodurch die Kapselhüllen der Mikrokapseln beschädigt werden, so dass die Trägerflüssigkeit aus den Mikrokapseln austritt und die Pigmente unbeweglich in den beschädigten Kapselhüllen zurückbleiben.

10. Verfahren nach Anspruch 9, wobei die mittels Laserstrahlung behandelten ersten Mikrokapseln irreversibel in einem wenig lichtdurchlässigen oder lichtundurchlässigen Zustand fixiert sind.

11. Verfahren zum Herstellen eines Sicherheitselements, umfassend
das Bereitstellen eines Sicherheitselements, das einen gemäß einem der AnSprüche 3 bis 8 definierten Aufbau aufweist, und
das Behandeln der ersten Mikrokapseln und ggf. der zweiten Mikrokapseln in zumindest einem Teilbereich des Sicherheitselements mittels einer vorbestimmten reaktiven Substanz, insbesondere mittels hydrophober Monomere, die durch die Kapselhüllen in die Mikrokapseln eindringt und die in den Mikrokapseln enthaltenen Pigmente durch chemische Reaktion örtlich irreversibel fixiert.

12. Verfahren nach Anspruch 11, wobei die mittels der vorbestimmten reaktiven Substanz behandelten ersten Mikrokapseln irreversibel in einem wenig lichtdurchlässigen oder lichtundurchlässigen Zustand fixiert sind.

13. Sicherheitselement, das zur Absicherung von Wertgegenständen geeignet ist, erhältlich durch das Verfahren gemäß einem der Ansprüche 9 bis 11.

14. Datenträger mit einem Sicherheitselement nach einem der Ansprüche 3 bis 8 oder nach Anspruch 13, wobei der Datenträger insbesondere eine Banknote oder ein anderes Wertdokument, ein Pass, eine Urkunde, Bezahlkarte oder eine Ausweiskarte ist.

## Claims

1. A micro capsule, the light transmission of which can be reversibly intensified by applying an external magnetic field, comprising a capsule shell in which a light-transmissive carrier medium, in particular a light-transmissive carrier liquid, and a multiplicity of magnetic, light-non-transmissive pigments of an average particle diameter in a region of 0.1 µm to 10 µm are encapsulated, wherein the pigments are so adapted that they are present in disordered fashion without external magnetic field and in one-dimensionally ordered fashion, in particular in the form of chains of pigments, upon applying a magnetic field.

2. The micro capsule according to claim 1, wherein the pigments are metal oxide pigments, preferably iron oxide pigments; and/or
the pigments are spherical pigments and the ratio between the largest and the smallest diameter amounts to no more than 4:1; and/or
the carrier liquid is a hydrophobic carrier liquid having 0 to 50 weight-% of an amphiphilic additive and 0 to 20 weight-% of general additives, which are chosen in particular from thickeners, dyes, preserving agents, oxidation protection agents or dispersing agents.

3. A security element that is suitable for securing objects of value and whose light transmission can be reversibly intensified by applying an external magnetic field, with a layer having a multiplicity of first micro capsules according to claim 1 or 2.

4. The security element according to claim 3, wherein the micro capsules have an average particle diameter in a region of 2 to 150 µm; and/or the micro capsules are incorporated in a binding agent; and/or the layer having the micro capsules is applied to an information-carrying background layer present preferably in the form of patterns, characters or a coding, and the information-carrying background layer is in particular an offset printed layer, screen printed layer, flexographically printed layer or intaglio printed layer.

5. The security element according to claim 3 or 4, wherein the layer having the micro capsules additionally has, besides the first micro capsules, a multiplicity of second micro capsules, wherein the second micro capsules respectively have a capsule shell, a carrier liquid encapsulated in the capsule shell and at least one magnetically alignable, platelet-shaped pigment, and the magnetically alignable platelet-shaped pigment in the micro capsule can be substantially freely rotated and aligned reversibly by an external magnetic field, and is preferably formed of several layers with at least one magnetic layer and with at least one nonmagnetic layer.

6. The security element according to claim 5, wherein the platelet-shaped pigments in the second micro capsules are magnetic interference pigments having a Fabry-Perot structure, magnetic oxidic multilayer pigments and/or coated magnetic pure iron pigments.

7. The security element according to any of the claims 3 to 6, wherein the layer having the micro capsules is provided at least in a partial area with a semitransparent, optically variable ink layer that is suitable for producing a viewing-angle dependent visual impression.

8. The security element according to claim 7, wherein the semitransparent, optically variable ink layer has a full-area interference layer or interference layer pigments embedded in a binding agent, and the embedded interference layer pigments can be chosen in particular from the group consisting of liquid crystal pigments, pearl luster pigments and pigments of a thin-layer structure comprising a reflective layer, an absorber layer and one or several interposed dielectric spacer layers.

9. A method for manufacturing a security element, comprising
the making available of a security element having a structure defined in accordance with any of the claims 3 to 8, and
the treating of the first micro capsules and optionally of the second micro capsules in at least a partial area of the security element by means of laser radiation, in particular by means of pulsed laser radiation in the near-infrared range, whereby the capsule shells of the micro capsules are damaged, so that the carrier liquid exits from the micro capsules and the pigments remain immobile in the damaged capsule shells.

10. The method according to claim 9, wherein the first micro capsules treated by means of laser radiation are fixed irreversibly in a lowly light-transmissive or light-non-transmissive state.

11. A method for manufacturing a security element, comprising
the making available of a security element having a structure defined in accordance with any of the claims 3 to 8, and
the treating of the first micro capsules and optionally of the second micro capsules in at least a partial area of the security element by means of a predetermined reactive substance, in particular by means of hydrophobic monomers, which penetrates through the capsule shells into the micro capsules and fixes the pigments contained in the micro capsules in locally irreversible fashion by chemical reaction.

12. The method according to claim 11, wherein the first micro capsules treated by means of the predetermined reactive substance are fixed irreversibly in a lowly light-transmissive or light-non-transmissive state.

13. A security element suitable for securing objects of value that is obtainable by the method according to any of the claims 9 to 11.

14. A data carrier having a security element according to any of the claims 3 to 8 or according to claim 13, wherein the data carrier is in particular a banknote or other value document, a passport, a deed, payment card or an identification card.

## Revendications

1. Microcapsule dont la translucidité peut être rendue réversiblement plus intense par application d'un champ magnétique extérieur, comprenant une enveloppe de capsule dans laquelle sont renfermés un médium porteur translucide, notamment un liquide porteur translucide, et une pluralité de pigments magnétiques non translucides ayant un diamètre moyen de particules situé entre 0,1 µm et 10 µm, les pigments étant ajustés de telle façon qu'ils se trouvent sous forme désordonnée sans champ magnétique extérieur et se trouvent sous forme unidimensionnellement ordonnée, notamment sous forme de chaîne de pigments, quand un champ magnétique est appliqué.

2. Microcapsule selon la revendication 1, les pigments étant des pigments à base d'oxyde métallique, de préférence des pigments d'oxyde de fer; et/ou
les pigments étant des pigments sphériques et le rapport du plus grand diamètre au plus petit diamètre n'étant pas supérieur à 4: 1; et/ou
le liquide porteur étant un liquide porteur hydrophobe qui présente 0 à 50 pourcent par poids d'un additif amphiphile et 0 à 20 pourcent par poids d'additifs génériques choisis notamment parmi des épaississants, colorants, conservateurs, substances protégeant contre l'oxydation ou auxiliaires de dispersion.

3. Élément de sécurité qui est approprié à la sécurisation d'objets de valeur et dont la translucidité peut être rendue réversiblement plus intense par application d'un champ magnétique extérieur, ayant une couche qui comporte une pluralité de premières microcapsules selon la revendication 1 ou 2.

4. Élément de sécurité selon la revendication 3, les microcapsules présentant un diamètre moyen de particules situé entre 2 µm et 150 µm; et/ou les microcapsules étant incorporées dans un liant; et/ou la couche comportant les microcapsules étant appliquée sur une couche de fond conductrice d'informations qui est disponible de préférence sous forme de motifs, caractères ou d'une codification, et la couche de fond conductrice d'informations étant notamment une couche d'impression offset, une couche sérigraphiée, une couche de flexographie ou une couche d'impression en creux par gravure.

5. Élément de sécurité selon la revendication 3 ou 4, la couche comportant les microcapsules comportant, outre les premières microcapsules, en plus une pluralité de deuxièmes microcapsules, les deuxièmes microcapsules comportant respectivement une enveloppe de capsule, un liquide porteur renfermé dans l'enveloppe de capsule et au moins un pigment en forme de plaquettes pouvant être aligné magnétiquement, et le pigment en forme de plaquettes pouvant essentiellement, dans la microcapsule, tourner librement et être réversiblement aligné magnétiquement par un champ magnétique extérieur et étant réalisé de préférence sous forme multicouche avec au moins une couche magnétique et avec au moins une couche non magnétique.

6. Élément de sécurité selon la revendication 5, les pigments en forme de plaquettes se trouvant dans les deuxièmes microcapsules étant des pigments magnétiques d'interférence à structure Fabry-Pérot, des pigments magnétiques multicouches oxydiques et/ou des pigments magnétiques de fer pur enrobés.

7. Élément de sécurité selon une des revendications de 3 à 6, la couche comportant les microcapsules étant pourvue, au moins dans une zone partielle, d'une couche d'encre optiquement variable semi-transparente qui est appropriée à la génération d'un aspect visuel dépendant de l'angle de vue.

8. Élément de sécurité selon la revendication 7, la couche d'encre optiquement variable semi-transparente comportant une couche d'interférence à pleine surface ou des pigments de couche d'interférence intégrés dans un liant, et les pigments de couche d'interférence intégrés pouvant notamment être choisis dans le groupe constitué par des pigments cristaux liquides, pigments nacrés et pigments à structure en couche mince comprenant une couche réfléchissante, une couche absorbeuse et une ou plusieurs couches d'espacement diélectriques intercalées.

9. Procédé de fabrication d'un élément de sécurité, comprenant
la mise à disposition d'un élément de sécurité qui présente un agencement défini suivant une des revendications de 3 à 8, et
le traitement des premières microcapsules et le cas échéant des deuxièmes microcapsules dans au moins une zone partielle de l'élément de sécurité au moyen de rayonnement laser, notamment au moyen de rayonnement laser pulsé dans l'infrarouge proche, ce par quoi les enveloppes de capsules des microcapsules sont endommagées, de telle sorte que le liquide porteur sort des microcapsules et les pigments restent bloqués immobiles dans les microcapsules endommagées.

10. Procédé selon la revendication 9, les premières microcapsules traitées par rayonnement laser étant irréversiblement fixées dans un état peu translucide ou non translucide.

11. Procédé de fabrication d'un élément de sécurité, comprenant
la mise à disposition d'un élément de sécurité qui présente un agencement défini suivant une des revendications de 3 à 8, et
le traitement des premières microcapsules et le cas échéant des deuxièmes microcapsules dans au moins une zone partielle de l'élément de sécurité au moyen d'une substance réactive prédéterminée, notamment au moyen de monomère hydrophobe qui pénètre à travers les enveloppes de capsules dans les microcapsules et fixe localement irréversiblement les pigments contenus dans les microcapsules par réaction chimique.

12. Procédé selon la revendication 11, les premières microcapsules traitées au moyen de la substance réactive prédéterminée étant fixées irréversiblement dans un état peu translucide ou non translucide.

13. Élément de sécurité qui est approprié à la sécurisation d'objets de valeur, pouvant être obtenu par un procédé selon une des revendications de 9 à 11.

14. Support de données ayant un élément de sécurité selon une des revendications de 3 à 8 ou selon la revendication 13, le support de données étant notamment un billet de banque ou un autre document de valeur, un passeport, un acte, une carte de paiement ou une carte d'identification.
